# FASCICULE DE BREVET EUROPEEN

(11) **EP 2 467 671 B1**
(45) Date de publication et mention de la délivrance du brevet: **05.03.2014**
(21) Numéro de dépôt: 10761054.5
(22) Date de dépôt: 12.08.2010
(51) Int. Cl.: G01M 5/00, G01B 7/16, G01S 17/46, G01S 17/06, G01B 11/02, G01B 11/16, G01L 1/22

(54) **JAUGE DE DÉFORMATION ET SYSTÈME DE LOCALISATION SPATIALE DE TELLES JAUGES**
DEHNUNGSMESSER UND SYSTEM ZUR RÄUMLICHEN ORTUNG DERARTIGER MESSER
STRAIN GAUGE, AND SYSTEM FOR SPATIALLY LOCATING SUCH GAUGES

(30) Priorité: 17.08.2009 FR 0955694
(43) Date de publication de la demande: 27.06.2012
(73) Titulaire: European Aeronautic Defence and Space Company EADS France, 75016 Paris (FR)
(72) Inventeur: SWIERGIEL, Nicolas, F-77420 Champs Sur Marne (FR); BOSQUET, Catherine, F-92320 Chatillon Sous Bagneux (FR); DIDIERJEAN, Sébastien, F-31400 Toulouse (FR)
(74) Mandataire: Coquel, Jean-Marc
(86) Numéro de dépôt international: PCT/FR2010/051708
(87) Numéro de publication internationale: WO 2011/020968

(56) Documents cités:
- EP-A1- 1 914 684
- WO-A1-2006/094409
- DE-A1- 10 038 450
- FR-A1- 2 706 045
- JP-A- 9 005 013
- JP-A- 2009 047 501
- US-A1- 2008 223 152
- US-B1- 6 724 930

## Description

La présente invention concerne une jauge de déformation dont la position et l'orientation à la surface d'un objet est détectable optiquement. L'invention concerne encore un système et une méthode de localisation spatiale de telles jauges placées à la surface d'un objet tel qu'une structure d'aéronef.

Il est connu de réaliser des essais de structure sur des aéronefs complets afin de valider les calculs prédictifs réalisés en amont par modélisations numériques, des performances structurales de nouvelles structures aéronautiques (voilure d'avion, ...). Ces calculs prédictifs permettent en effet aux constructeurs de prendre très tôt des décisions stratégiques sur les produits en cours de développement.

Ces essais de structure sont typiquement de deux types : des essais de mise en charge statique et des essais de fatigue dynamiques. Lors de ces essais, des vérins développent des charges qui sont appliquées sur la structure de l'aéronef, par exemple pour récréer certaines charges rencontrées en vol.

Le comportement de la structure en réponse à ces sollicitations est alors suivi de façon permanente au moyen de capteurs positionnés à la surface de la structure sous essai.

Ces capteurs sont des jauges de déformation, encore appelées jauges de contrainte, mesurant chacune la déformation locale de la structure.

Chacune de ces jauges de déformation comporte ainsi un élément destiné à s'allonger réversiblement sous l'action d'un effort appliqué en exhibant une variation de sa résistance. Cet allongement s'opère le long d'un axe définissant l'axe de mesure de la jauge. En mesurant cette variation très faible de résistance, on peut remonter aux déformations s'exerçant dans la zone de mesure de la jauge dans la structure sous essai.

Or, une multitude de jauges, typiquement plus de 1000, est nécessaire pour des essais de structure à grande échelle, ce qui exige le recours à des systèmes d'acquisition de données multicanaux et spécialisés.

Chacune de ces jauges étant montée manuellement sur la structure par des opérateurs qualifiés, ce montage est une tâche particulièrement laborieuse d'autant plus qu'il est nécessaire de câbler et calibrer chaque jauge.

Chaque jauge doit avoir une position strictement définie sur la structure pour correspondre aux calculs et être identifiée individuellement afin de permettre l'association d'une mesure avec une zone ponctuelle précise de la structure réelle sous essai.

Or, on observe des imprécisions dans le positionnement de certaines jauges pouvant résulter par exemple en une imprécision dans l'orientation angulaire de l'axe de mesure de ces jauges, voire dans leur point de placement réel par rapport au positionnement théorique.

Ces imprécisions introduisent des écarts résiduels faussant ainsi la comparaison entre la tenue aux efforts de pièces structurelles calculées et de pièces structurelles réelles.

Les documents DE10038450 et JP09005013 décrivent des jauges de déformation basées sur la variation de résistance électrique avec des repères d'alignement visuels.

Il serait, par conséquent, fortement intéressant de disposer d'un système permettant de relever aisément la position exacte et l'orientation des jauges sur la structure réelle afin d'autoriser une comparaison plus fine entre le comportement de la structure réelle et les valeurs estimées par simulation numérique.

L'objectif de la présente invention est donc de proposer une jauge de déformation simple dans sa conception et dans son mode opératoire, économique, autorisant un relevé précis de la position de la jauge à la surface d'une structure ainsi que de son axe de mesure.

Un autre objet de la présente invention est un système et une méthode de localisation spatiale de ces jauges de déformation placées à la surface externe d'un objet tel qu'une structure d'aéronef, simples dans leur conception et dans leur mode opératoire, fiables et permettant une prise à la volée des positions des jauges à la surface de cet objet.

A cet effet, l'invention concerne une jauge de déformation comprenant un substrat support d'un élément destiné à s'allonger réversiblement sous l'action d'un effort appliqué en exhibant une variation de sa résistance électrique, cet élément s'allongeant le long d'un axe de mesure de ladite jauge.

Selon l'invention, cette jauge de déformation comprend au moins une cible de contraste apte à réfléchir un faisceau lumineux incident, ladite au moins une cible de contraste étant placée sur la jauge dans une position prédéterminée permettant la détermination du centre et de l'axe de mesure de ladite jauge de déformation par la détection de la position de ladite au moins une cible de contraste, ladite au moins une cible de contraste étant une cible rétro-réflective.

De préférence, cette détection des positions des cibles de contraste, et par conséquent des jauges, est réalisée par la projection d'un motif lumineux émis par une source lumineuse telle qu'une source laser à la surface de ces cibles et la détection de la réflexion de ce motif lumineux par la structure et ces cibles.

Dans différents modes de réalisation de cette jauge de déformation, la présente invention concerne également les caractéristiques suivantes qui devront être considérées isolément ou selon toutes leurs combinaisons techniquement possibles :
- ladite au moins une cible de contraste est placée sur la surface externe du substrat support de ladite jauge de déformation,
Ladite au moins une cible de contraste peut ainsi être directement intégrée à la jauge de déformation.
Alternativement, cette ou ces cibles de contraste peuvent être rapportées. A titre purement illustratif, cette ou ces cibles de contraste peuvent ainsi être placées sur un support tel qu'un patch, ce support comportant une ouverture destinée à recevoir la jauge de déformation de sorte que la ou les cibles de contraste sont placées autour de cette jauge, cette dernière étant alors directement en contact avec la surface de l'objet à mesurer. Ce support peut ainsi avoir une forme de C, de U, de T ou encore être de forme carrée ou rectangulaire avec une ouverture centrale aux dimensions de la jauge de déformation.
- la jauge de déformation comprend une seule cible de contraste, laquelle comporte au moins un élément de marquage permettant de déterminer l'axe de mesure de cette jauge de déformation.
A titre purement illustratif, cette cible de contraste est un disque comportant une rainure repérant l'axe de mesure de la jauge de déformation. Alternativement, cette cible de contraste peut avoir la forme d'une ellipse, ou respectivement d'une croix, l'un des axes de l'ellipse, ou respectivement l'une des branches de cette croix, définissant l'axe de mesure de la jauge de déformation.
La position du centre de la jauge de déformation est alors prédéterminée et connue par rapport au centre de cette cible de contraste.
- la jauge comprend deux cibles de contraste alignées le long de l'axe de mesure et placées de manière équidistante du centre de ladite jauge de déformation,
- la jauge comprend trois cibles de contraste non alignées et placées à la surface externe dudit substrat de manière à autoriser une détermination du centre de ladite jauge de déformation par triangulation, une desdites cibles de contraste ayant une forme et/ou des dimensions différentes des deux autres cibles de contraste et étant placée sur ledit axe de mesure passant par le centre de ladite jauge,
- ces cibles de contraste sont des cibles circulaires rétro-réflectives,
- la jauge comporte de plus un élément d'identification placé à la surface externe dudit substrat, ledit élément d'identification permettant d'identifier ladite jauge individuellement.
Cet élément d'identification peut être une étiquette comportant un signe d'authentification inscrit en clair tel qu'un code à barres, les caractéristiques de ce signe étant introduite dans une base de données afin de relier la position de la jauge et son identification. De préférence, cette étiquette comporte alors sur sa face arrière une face adhésive repositionnable. Alternativement, cette étiquette peut comporter un liseré métallique à composition particulière d'alliage ne répondant qu'à une fréquence donnée.

L'invention concerne enfin un système de localisation spatiale de jauges de déformation placées à la surface externe d'un élément structurel.

Selon l'invention,
- lesdites jauges de déformation sont des jauges de déformation telle que décrites précédemment,
- ledit système comprend un système de mesure optique permettant de déterminer, dans une zone d'observation de ce système, la position tridimensionnelle de la ou des cibles de contraste de chacune de ces jauges de déformation dans un système de coordonnées lié à cet élément structurel, et
- une unité de calcul permettant de déterminer à partir de la position tridimensionnelle de ces cibles de contraste placées dans la zone d'observation, la position du centre de chaque jauge et l'orientation de cette jauge dans le système de coordonnées lié à cet élément structurel.

Ce système de mesure optique est un système de mesure sans contact.

Dans différents modes de réalisation de ce système de localisation, la présente invention concerne également les caractéristiques suivantes qui devront être considérées isolément ou selon toutes leurs combinaisons techniquement possibles :
- le système de mesure optique comporte de plus un appareil de lecture de chacun desdits éléments d'identification afin d'associer à la position du centre de chaque jauge et de son orientation dans le système de coordonnées lié audit élément structurel, une identification de la jauge.
L'élément d'identification de la jauge peut comprendre deux volets reliés entre eux par une ligne de séparation telle qu'une ligne de moindre résistance ou ligne prédécoupée, de sorte qu'un volet est amovible pour être fixé sur le câblage de la jauge. Chacun de ces volets comporte alors le même signe d'authentification.
- le système de mesure optique comporte un capteur de mesure tridimensionnelle à main autopositionné comportant un projecteur de motifs lumineux laser, une paire d'au moins deux objectifs et photodétecteurs, ce capteur générant des images 2D à partir de chaque photodétecteur, et au moins un processeur d'images pour traiter ladite paire d'images 2D,

On entend par « autopositionné » que le système calcule en permanence sa propre position et orientation à partir d'observations tout en scannant la géométrie de surface de l'élément structurel. Pour cela, le système exploite un principe de triangulation et intègre un capteur qui capture à la fois les points de surface 2D provenant de la réflexion du motif lumineux laser sur la surface de l'élément structurel et les éléments de positionnement 2D provenant de l'observation des éléments de positionnement.

De préférence, le système de mesure optique comprend un capteur de mesure comportant un projecteur de motifs lumineux pour former un motif lumineux à la surface dudit élément structurel au moins dans ladite zone d'observation, une paire de caméras pour acquérir une paire d'images bidimensionnelles dudit motif lumineux à la surface dudit élément structurel et au moins une partie d'un ensemble d'éléments de positionnement, et un système de coordonnées du capteur de mesure, lesdits éléments de positionnement étant fixés audit élément structurel de sorte que cet élément structurel et, en conséquence, ledit système de coordonnées de l'élément structurel peut être déplacé dans l'espace tandis que lesdits éléments de positionnement sont à l'arrêt sur ledit élément structurel ; un processeur d'images pour extraire à partir de ladite paire d'images 2D, une paire d'ensembles de points de surface 2D provenant du motif lumineux et une paire d'ensembles d'éléments de positionnement 2D provenant de ladite au moins une partie d'un ensemble d'éléments de positionnement ; un calculateur de point de surface 3D pour calculer un jeu de points de surface 3D dans ledit système de coordonnées du capteur de mesure en utilisant ladite paire d'ensembles de points de surface 2D ; un calculateur d'éléments de positionnement 3D pour calculer un jeu d'éléments de positionnement 3D dans ledit système de coordonnées du capteur de mesure en utilisant ladite paire d'ensembles d'éléments de positionnement 2D ; un adaptateur d'éléments de positionnement pour calculer par informatique les paramètres de transformée pour caractériser une transformation spatiale entre ledit système de coordonnées du capteur de mesure et ledit système de coordonnées de l'élément structurel, en couplant les éléments correspondants entre ledit jeu d'éléments de positionnement 3D calculés dans ledit système de coordonnées du capteur de mesure et un jeu d'éléments de positionnement 3D de référence dans ledit système de coordonnées de l'élément structurel, ledit jeu d'éléments de positionnement 3D de référence étant obtenu d'observations antérieures ; un transformateur de points de surface 3D pour transformer ledit jeu de points de surface 3D calculés dans ledit système de coordonnées du capteur de mesure en un jeu de points de surface 3D transformés dans ledit système de coordonnées de l'élément structurel en utilisant lesdits paramètres de transformée, un transformateur d'éléments de positionnement 3D pour transformer ledit jeu d'éléments de positionnement 3D calculés dans ledit système de coordonnées du capteur de mesure en un jeu d'éléments de positionnement 3D transformés dans ledit système de coordonnées de l'élément structurel en utilisant lesdits paramètres de transformée, et un générateur d'éléments de positionnement de référence pour cumuler ledit jeu d'éléments de positionnement 3D transformés pour approvisionner et augmenter ledit jeu d'éléments de positionnement 3D de référence. Un tel système de mesure optique est décrit dans la demande de brevet WO 2006/094409 au nom de la société CREAFORM Inc.

A ce titre, le scanneur laser 3D à main, commercialisé sous la dénomination HANDYSCAN 3D, par la société CREAFORM Inc., Bél-air Street, Lévis, Québec G6V 6K9 CANADA, est particulièrement approprié à la mise en oeuvre de l'invention.

Bien entendu, les points de surface dans la zone d'observation obtenus à partir de la projection d'un motif lumineux et permettant de déterminer la géométrie de l'élément structurel, comprennent notamment les cibles de contraste de chaque jauge.

Avantageusement, lesdits éléments de positionnement sont des éléments naturels dudit élément structurel ou des éléments rapportés.

Le système de mesure optique comporte un émetteur sans fil pour transmettre la paire d'images 2D du capteur de mesure tridimensionnelle à main au processeur d'images,

L'unité de calcul est reliée par une liaison à une unité de stockage comprenant au moins un fichier recevant la position et l'orientation de chaque jauge dans un système de coordonnées lié audit élément structurel ainsi que la mesure de la variation de sa résistance et éventuellement l'identification de ladite jauge.

L'invention concerne enfin un système de mesure de contraintes d'un élément structurel, ledit système comprenant un ensemble de jauges de déformation destinées à être placées à la surface externe dudit élément structurel pour détecter chacune la contrainte s'appliquant à la zone dudit élément structurel avec laquelle ladite jauge de déformation est en contact comme un changement dans la résistance électrique de ladite jauge de déformation; et une unité de circuit électrique reliée à ladite jauge de déformation et convertissant ledit changement de résistance électrique en un signal de sortie.

Selon l'invention,
- ces jauges de déformation sont des jauges de déformation telles que décrites précédemment,
- ledit système comprend un système de mesure optique permettant de déterminer, dans une zone d'observation de ce système de mesure, la position tridimensionnelle des cibles de contraste de chacune desdites jauges de déformation dans un système de coordonnées lié audit élément structurel, et
- une unité de calcul permettant de déterminer à partir de la position tridimensionnelle desdites cibles de contraste placées dans ladite zone d'observation, la position du centre de chaque jauge et l'orientation de ladite jauge dans le système de coordonnées lié audit élément structurel.

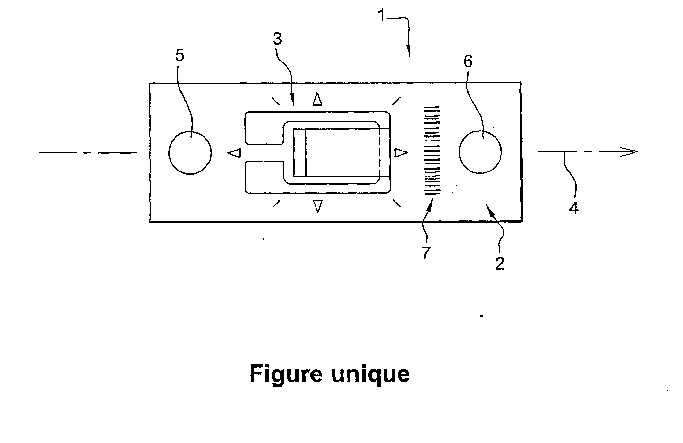

L'invention sera décrite plus en détail en référence à l'unique figure annexée représentant une vue de dessus d'une jauge de déformation selon un mode de réalisation préféré de l'invention;

La Figure unique montre une vue de dessus d'une jauge de déformation selon un mode de réalisation préféré de l'invention. Cette jauge de déformation 1 comprend un substrat 2 support d'un élément 3 destiné à s'allonger réversiblement sous l'action d'une contrainte appliquée en exhibant une variation de sa résistance, cet élément 3 s'allongeant le long d'un axe de mesure 4 de la jauge.

Le substrat 2 peut être un support souple isolant et extensible pour suivre la déformation de la structure, ce substrat pouvant être revêtu d'un revêtement de protection de l'élément 3 destiné à s'allonger.

Cette jauge 1 comprend deux cibles de contraste 5, 6 aptes à réfléchir un faisceau lumineux incident, ces cibles de contraste 5, 6 étant placées sur la surface externe du substrat 2 support dans des positions prédéterminées permettant la détermination du centre théorique et de l'axe de mesure 4 de la jauge de déformation par la détection optique des positions de ces cibles de contraste 5, 6.

Ces deux cibles de contraste 5, 6 sont alignées le long de l'axe de mesure 4 de la jauge et placées de manière équidistante du centre théorique de cette jauge de déformation 1 de sorte que la détection de ces cibles 5, 6 permet de déterminer très aisément la position du centre et l'axe de mesure de cette jauge 1.

Ces cibles de contraste 5, 6 sont des cibles circulaires rétro-réflectives.

Cette détection des positions des cibles de contraste 5, 6 est avantageusement réalisée par la projection d'un motif lumineux émis par un scanneur laser 3D à main à la surface de ces cibles et la détection de la réflexion de ce motif lumineux par l'élément de structure et les cibles de contraste 5, 6 des jauges 1.

La jauge comporte de plus un élément d'identification 7 placé à la surface externe du substrat 2, cet élément d'identification 7 permettant d'identifier individuellement cette jauge 1. L'élément d'identification 7 est ici une étiquette comportant un code à barres.

Un lecteur optique monté sur le scanneur laser 3D à main permet de déterminer simultanément la position des cibles de contraste 5, 6 dans un système de coordonnées liés à l'élément structurel de l'aéronef et l'identification de la jauge 1 afin d'associer ces mesures qui sont envoyées via un émetteur sans fil du scanneur laser 3D à main vers une unité de traitement comportant un processeur d'images pour traiter les images 2D acquises par le scanneur laser 3D à main.

Ce scanneur laser 3D à main qui est autopositionné, permet avantageusement une prise à la volée des positions des cibles de contraste 5, 6.

A titre purement illustratif, le motif lumineux projeté par ce scanneur laser 3D à la surface de l'élément structurel peut être une croix.

L'invention concerne encore une méthode de localisation spatiale de jauges de déformation placées à la surface externe d'un élément structurel. Ces jauges de déformation comprennent chacune un substrat support d'un élément destiné à s'allonger réversiblement sous l'action d'un effort appliqué en exhibant une variation de sa résistance, cet élément s'allongeant le long d'un axe de mesure de la jauge.

Ces jauges de déformation comprennent de plus chacune au moins une cible de contraste apte à réfléchir un faisceau lumineux incident, ces cibles de contraste étant placées sur chacune de ces jauges dans une position prédéterminée permettant la détermination du centre et de l'axe de mesure de la jauge de déformation correspondante par la détection de la position de ces cibles de contraste.

On définit un système de coordonnées lié à l'élément structurel. On déplace ensuite à la surface externe de cet élément structurel, un système de mesure optique permettant de déterminer, dans une zone d'observation de ce système, la position tridimensionnelle de la ou des cibles de contraste de chacune desdites jauges de déformation dans ledit système de coordonnées.

On détermine à partir de la position tridimensionnelle des cibles de contraste placées dans ladite zone d'observation, la position du centre de chaque jauge et l'orientation de ladite jauge dans le système de coordonnées lié audit élément structurel.

De préférence, on détermine simultanément l'élément d'identification de chaque jauge de déformation placée dans la zone d'observation.

## Revendications

1. Jauge de déformation comprenant un substrat (2) support d'un élément (3) destiné à s'allonger réversiblement sous l'action d'un effort appliqué en exhibant une variation de sa résistance électrique, ledit élément (3) s'allongeant le long d'un axe de mesure de ladite jauge (1), ladite jauge comprenant au moins une cible de contraste (5, 6) apte à réfléchir un faisceau lumineux incident, ladite au moins une cible de contraste (5, 6) étant placée sur ladite jauge dans une position prédéterminée permettant la détermination du centre et de l'axe de mesure (4) de ladite jauge de déformation (1) par la détection de la position de ladite au moins une cible de contraste (5, 6), **caractérisée en ce que** ladite au moins une cible de contraste (5, 6) est une cible rétro-réflective.

2. Jauge selon la revendication 1, **caractérisée en ce qu'**elle comprend une seule cible de contraste rétro-réflective (5, 6), ladite cible comportant au moins un élément de marquage permettant de déterminer l'axe de mesure (4) de ladite jauge de déformation (1).

3. Jauge selon la revendication 1, **caractérisée en ce qu'**elle comprend deux cibles de contraste rétro-réflectives (5, 6) alignées le long dudit axe de mesure (4) et placées de manière équidistante du centre de ladite jauge de déformation (1).

4. Jauge selon la revendication 1, **caractérisée en ce qu'**elle comprend trois cibles de contraste rétro-réflectives non alignées et placées à la surface externe dudit substrat (2) de manière à autoriser une détermination du centre de ladite jauge de déformation (1) par triangulation, une desdites cibles de contraste (5, 6) ayant une forme et/ou des dimensions différentes des deux autres cibles de contraste (5, 6) et étant placée sur ledit axe de mesure (4) passant par le centre de ladite jauge.

5. Jauge selon l'une quelconque des revendications 1 à 4, **caractérisée en ce que** lesdites cibles de contraste (5, 6) sont des cibles circulaires rétro-réflectives.

6. Jauge selon l'une quelconque des revendications 1 à 5, **caractérisée en ce qu'**elle comporte de plus un élément d'identification (7) placé à la surface externe dudit substrat (2), ledit élément d'identification (7) permettant d'identifier ladite jauge individuellement.

7. Système de localisation spatiale de jauges de déformation placées à la surface externe d'un élément structurel, tel que:
- lesdites jauges de déformation sont des jauges de déformation selon l'une quelconque des revendications 1 à 6,
- ledit système comprend un système de mesure optique permettant de déterminer, dans une zone d'observation dudit système, la position tridimensionnelle de la ou des cibles de contraste (5, 6) de chacune desdites jauges de déformation dans un système de coordonnées lié audit élément structurel, et
- une unité de calcul permettant de déterminer à partir de la position tridimensionnelle desdites cibles de contraste (5, 6) placées dans ladite zone d'observation, la position du centre de chaque jauge et l'orientation de ladite jauge dans le système de coordonnées lié audit élément structurel.

8. Système selon la revendication 7, tel que ledit système de mesure optique comporte de plus un appareil de lecture de chacun desdits éléments d'identification (7) afin d'associer à la position du centre de chaque jauge (1) et de son orientation dans le système de coordonnées lié audit élément structurel, une identification de ladite jauge.

9. Système selon la revendication 7 ou 8, tel que ledit système de mesure optique comporte un capteur de mesure tridimensionnelle à main autopositionné comportant un projecteur de motifs lumineux laser, une paire d'au moins deux objectifs et photodétecteurs, ce capteur générant des images 2D à partir de chaque photodétecteur, et au moins un processeur d'images pour traiter ladite paire d'images 2D.

10. Système selon la revendication 9, tel que ledit système de mesure optique comporte un émetteur sans fil pour transmettre ladite paire d'images 2D du capteur de mesure tridimensionnelle à main audit processeur d'images.

11. Système selon l'une quelconque des revendications 7 à 10, tel que ladite unité de calcul est reliée par une liaison à une unité de stockage comprenant au moins un fichier recevant la position et l'orientation de chaque jauge dans un système de coordonnées lié audit élément structurel ainsi que la mesure de la variation de sa résistance électrique et éventuellement l'identification de ladite jauge.

12. Méthode de localisation spatiale de jauges de déformation placées à la surface externe d'un élément structurel, telle que
- lesdites jauges de déformation sont des jauges de déformation selon l'une quelconque des revendications 1 à 6,
- on définit un système de coordonnées lié audit élément structurel,
- on déplace à la surface externe dudit élément structurel, un système de mesure optique permettant de déterminer, dans une zone d'observation dudit système, la position tridimensionnelle de la ou des cibles de contraste rétro-réflectives (5, 6) de chacune desdites jauges de déformation dans ledit système de coordonnées, et
- on détermine à partir de la position tridimensionnelle des cibles de contraste rétro-réflectives (5, 6) placées dans ladite zone d'observation, la position du centre de chaque jauge et l'orientation de ladite jauge dans le système de coordonnées lié audit élément structurel.

13. Méthode de localisation selon la revendication 12, **caractérisée en ce qu'**on détermine simultanément l'élément d'identification (7) de chacune desdites jauges de déformation placées dans ladite zone d'observation.

14. Système de mesure de contraintes d'un élément structurel, ledit système comprenant un ensemble de jauges de déformation destinées à être placées à la surface externe dudit élément structurel pour détecter chacune la déformation s'appliquant à la zone dudit élément structurel avec laquelle ladite jauge de déformation est en contact comme un changement dans la résistance électrique de ladite jauge de déformation; et une unité de circuit électrique reliée à ladite jauge de déformation et convertissant ledit changement de résistance électrique en un signal de sortie, **caractérisé en ce que**
- lesdites jauges de déformation sont des jauges de déformation selon l'une quelconque des revendications 1 à 6,
- ledit système comprend un système de mesure optique permettant de déterminer, dans une zone d'observation dudit système, la position tridimensionnelle de la ou des cibles de contraste rétro-réflectives (5, 6) de chacune desdites jauges de déformation dans un système de coordonnées lié audit élément structurel, et
- une unité de calcul permettant de déterminer à partir de la position tridimensionnelle desdites cibles de contraste (5, 6) placées dans ladite zone d'observation, la position du centre de chaque jauge et l'orientation de ladite jauge dans le système de coordonnées lié audit élément structurel.

## Patentansprüche

1. Dehnungsmessstreifen, der ein Substrat (2) enthält, das ein Element (3) trägt, welches dazu bestimmt ist, sich unter der Einwirkung einer angewendeten Kraft reversibel zu verlängern, indem es eine Änderung seines elektrischen Widerstands vorzeigt, wobei das Element (3) sich entlang einer Messachse des Messstreifens (1) verlängert, wobei der Messstreifen mindestens ein Kontrastziel (5, 6) enthält, das einen einfallenden Lichtstrahl reflektieren kann, wobei das mindestens eine Kontrastziel (5, 6) auf dem Messstreifen in einer vorbestimmten Stellung angeordnet ist, die die Festlegung der Mitte und der Messachse (4) des Dehnungsmessstreifens (1) durch die Erfassung der Stellung des mindestens einen Kontrastziels (5, 6) erlaubt, **dadurch gekennzeichnet, dass** das mindestens eine Kontrastziel (5, 6) ein retroreflektives Ziel ist.

2. Messstreifen nach Anspruch 1, **dadurch gekennzeichnet, dass** er ein einziges retroreflektives Kontrastziel (5, 6) enthält, wobei das Ziel mindestens ein Markierelement aufweist, das es ermöglicht, die Messachse (4) des Dehnungsmessstreifens (1) festzulegen.

3. Messstreifen nach Anspruch 1, **dadurch gekennzeichnet, dass** er zwei retroreflektive Kontrastziele (5, 6) enthält, die entlang der Messachse (4) ausgerichtet und in gleichem Abstand zur Mitte des Dehnungsmessstreifens (1) angeordnet sind.

4. Messstreifen nach Anspruch 1, **dadurch gekennzeichnet, dass** er drei nicht ausgerichtete und an der Außenfläche des Substrats (2) angeordnete retroreflektive Kontrastziele enthält, um eine Festlegung der Mitte des Dehnungsmessstreifens (1) durch Triangulation zu erlauben, wobei eines der Kontrastziele (5, 6) eine andere Form und/oder andere Abmessungen als die zwei anderen Kontrastziele (5, 6) hat und auf der durch die Mitte des Messstreifens verlaufenden Messachse (4) angeordnet ist.

5. Messstreifen nach einem der Ansprüche 1 bis 4, **dadurch gekennzeichnet, dass** die Kontrastziele (5, 6) kreisförmige retroreflektive Ziele sind.

6. Messstreifen nach einem der Ansprüche 1 bis 5, **dadurch gekennzeichnet, dass** er außerdem ein Identifikationselement (7) aufweist, das an der Außenfläche des Substrats (2) angeordnet ist, wobei das Identifikationselement (7) es ermöglicht, den Messstreifen einzeln zu identifizieren.

7. System zur räumlichen Lokalisierung von Dehnungsmessstreifen, die an der Außenfläche eines Strukturelements angeordnet sind, derart, dass:
- die Dehnungsmessstreifen Dehnungsmessstreifen nach einem der Ansprüche 1 bis 6 sind,
- das System ein optisches Messsystem enthält, das es ermöglicht, in einer Beobachtungszone des Systems die dreidimensionale Stellung des oder der Kontrastziele (5, 6) jedes der Dehnungsmessstreifen in einem mit dem Strukturelement verbundenen Koordinatensystem festzulegen, und
- eine Recheneinheit, die es ermöglicht, ausgehend von der dreidimensionalen Stellung der in der Beobachtungszone angeordneten Kontrastziele (5, 6) die Stellung der Mitte jedes Messstreifens und die Ausrichtung des Messstreifens im mit dem Strukturelement verbundenen Koordinatensystem festzulegen.

8. System nach Anspruch 7, derart dass das optische Messsystem außerdem ein Lesegerät jedes der Identifikationselemente (7) aufweist, um der Stellung der Mitte jedes Messstreifens (1) und seiner Ausrichtung im mit dem Strukturelement verbundenen Koordinatensystem eine Identifikation des Messstreifens zuzuordnen.

9. System nach Anspruch 7 oder 8, derart, dass das optische Messsystem einen selbstpositionierten dreidimensionalen Handmesssensor aufweist, der einen Projektor von Laserlichtmustern, ein Paar von mindestens zwei Objektiven und Fotodetektoren, wobei dieser Sensor 2D-Bilder ausgehend von jedem Fotodetektor erzeugt, und mindestens einen Bildprozessor aufweist, um das Paar von 2D-Bildern zu verarbeiten.

10. System nach Anspruch 9, derart, dass das optische Messsystem einen drahtlosen Emitter aufweist, um das Paar von 2D-Bildern vom dreidimensionalen Handmesssensor zum Bildprozessor zu übertragen.

11. System nach einem der Ansprüche 7 bis 10, derart, dass die Recheneinheit über eine Verbindung mit einer Speichereinheit verbunden ist, die mindestens eine Datei enthält, die die Stellung und die Ausrichtung jedes Messstreifens in einem mit dem Strukturelement verbundenen Koordinatensystem sowie den Messwert der Änderung seines elektrischen Widerstands und ggf. die Identifikation des Messstreifens empfängt.

12. Verfahren zur räumlichen Lokalisierung von an der Außenfläche eines Strukturelements angeordneten Dehnungsmessstreifen, derart, dass
- die Dehnungsmessstreifen Dehnungsmessstreifen nach einem der Ansprüche 1 bis 6 sind,
- ein mit dem Strukturelement verbundenes Koordinatensystem definiert wird,
- an der Außenfläche des Strukturelements ein optisches Messsystem verschoben wird, das es ermöglicht, in einer Beobachtungszone des Systems die dreidimensionale Stellung des oder der retroreflektiven Kontrastziele (5, 6) jedes der Dehnungsmessstreifen im Koordinatensystem festzulegen, und
- ausgehend von der dreidimensionalen Stellung der in der Beobachtungszone angeordneten retroreflektiven Kontrastziele (5, 6) die Stellung der Mitte jedes Messstreifens und die Ausrichtung des Messstreifens in einem mit dem Strukturelement verbundenen Koordinatensystem festgelegt wird.

13. Lokalisierungsverfahren nach Anspruch 12, **dadurch gekennzeichnet, dass** gleichzeitig das Identifikationselement (7) jedes der Dehnungsmessstreifen festgelegt wird, die in der Beobachtungszone angeordnet sind.

14. System zur Messung von Belastungen eines Strukturelements, wobei das System eine Einheit von Dehnungsmessstreifen, die dazu bestimmt sind, an der Außenfläche des Strukturelements angeordnet zu werden, um je die Dehnung, die an die Zone des Strukturelements angewendet wird, mit der der Dehnungsmessstreifen in Kontakt ist, als eine Änderung des elektrischen Widerstands des Dehnungsmessstreifens zu erfassen; und eine elektrische Schaltungseinheit enthält, die mit dem Dehnungsmessstreifen verbunden ist und die Änderung des elektrischen Widerstands in ein Ausgangssignal umwandelt, **dadurch gekennzeichnet, dass**
- die Dehnungsmessstreifen Dehnungsmessstreifen nach einem der Ansprüche 1 bis 6 sind,
- das System ein optisches Messsystem enthält, das es ermöglicht, in einer Beobachtungszone des Systems die dreidimensionale Stellung des oder der retroreflektiven Kontrastziele (5, 6) jedes der Dehnungsmessstreifen in einem mit dem Strukturelement verbundenen Koordinatensystem festzulegen, und
- eine Recheneinheit, die es ermöglicht, ausgehend von der dreidimensionalen Stellung der in der Beobachtungszone angeordneten Kontrastziele (5, 6) die Stellung der Mitte jedes Messstreifens und die Ausrichtung des Messstreifens in dem mit dem Strukturelement verbundenen Koordinatensystem festzulegen.

## Claims

1. Strain gauge comprising a substrate (2) for mounting an element (3) to be reversibly lengthened under the action of a force applied while displaying a variation in its electrical resistance, said element (3) lengthening along a measurement axis of said gauge (1), said gauge comprising at least one contrast target (5, 6) capable of reflecting an incident light beam, said at least one contrast target (5, 6) being placed on said gauge in a predetermined position making it possible to determine the centre and the measurement axis (4) of said strain gauge (1) by detecting the position of said at least one contrast target (5, 6), **characterized in that** said at least one contrast target (5, 6) is a retro-reflective target.

2. Gauge according to Claim 1, **characterized in that** it comprises a single retro-reflective contrast target (5, 6), said target comprising at least one marking element making it possible to determine the measurement axis (4) of said strain gauge (1).

3. Gauge according to Claim 1, **characterized in that** it comprises two retro-reflective contrast targets (5, 6) aligned along said measurement axis (4) and arranged equidistantly from the centre of said strain gauge (1).

4. Gauge according to Claim 1, **characterized in that** it comprises three retro-reflective contrast targets, which are not aligned and which are placed on the outer surface of said substrate (2) so as to make it possible to determine the centre of said strain gauge (1) by triangulation, one of said contrast targets (5, 6) having a shape and/or dimensions different from the two other contrast targets (5, 6) and being placed on said measurement axis (4) passing through the centre of said gauge.

5. Gauge according to any one of Claims 1 to 4, **characterized in that** said contrast targets (5, 6) are circular retro-reflective targets.

6. Gauge according to any one of Claims 1 to 5, **characterized in that** it further comprises an identification element (7) placed on the outer surface of said substrate (2), said identification element (7) making it possible to identify said gauge individually.

7. System for spatially locating strain gauges placed on the outer surface of a structural element, such that:
- said strain gauges are strain gauges according to any one of Claims 1 to 6,
- said system comprises an optical measurement system making it possible to determine, in an observation zone of said system, the three-dimensional position of the contrast target(s) (5, 6) of each of said strain gauges in a coordinate system associated with said structural element, and
- a calculation unit making it possible to determine, on the basis of the three-dimensional position of said contrast targets (5, 6) placed in said observation zone, the position of the centre of each gauge and the orientation of said gauge in the coordinate system associated with said structural element.

8. System according to Claim 7, such that said optical measurement system further comprises an apparatus for reading each of said identification elements (7) so as to associate an identification of each gauge with the position of the centre of said gauge (1) and its orientation in the coordinate system associated with said structural element.

9. System according to Claim 7 or 8, such that said optical measurement system comprises a self-positioning handheld three-dimensional measurement sensor comprising a laser light pattern projector, a pair of at least two lenses and photodetectors, this sensor generating 2D images from each photodetector, and at least one image processor for processing said pair of 2D images.

10. System according to Claim 9, such that said optical measurement system comprises a wireless transmitter for transmitting said pair of 2D images from the handheld three-dimensional measurement sensor to said image processor.

11. System according to any one of Claims 7 to 10, such that said calculation unit is connected by a link to a storage unit comprising at least one file receiving the position and the orientation of each gauge in a coordinate system associated with said structural element as well as the measurement of the variation of its electrical resistance and potentially the identification of said gauge.

12. Method for spatially locating strain gauges placed on the outer surface of a structural element, such that
- said strain gauges are strain gauges according to any one of Claims 1 to 6,
- a coordinate system associated with said structural element is defined,
- an optical measurement system making it possible to determine, in an observation zone of said system, the three-dimensional position of the retro-reflective contrast target(s) (5, 6) of each of said strain gauges in said coordinate system is displaced on the outer surface of said structural element, and
- the position of the centre of each gauge and the orientation of said gauge in the coordinate system associated with said structural element is determined on the basis of the three-dimensional position of the retro-reflective contrast targets (5, 6) placed in said observation zone.

13. Locating method according to Claim 12, **characterized in that** the identification element (7) of each of said strain gauges placed in said observation zone is determined simultaneously.

14. System for measuring forces of a structural element, said system comprising a set of strain gauges to be placed on the outer surface of said structural element so as to each detect the deformation applied to the zone of said structural element with which said strain gauge is in contact as a change in the electrical resistance of said strain gauge; and an electric circuit unit connected to said strain gauge and converting said change in electrical resistance into an output signal, **characterized in that**
- said strain gauges are strain gauges according to any one of Claims 1 to 6,
- said system comprises an optical measurement system making it possible to determine, in a zone of observation of said system, the three-dimensional position of the retro-reflective contrast target(s) (5, 6) of each of said strain gauges in a coordinate system associated with said structural element, and
- a calculation unit making it possible to determine, on the basis of the three-dimensional position of said contrast targets (5, 6) placed in said observation zone, the position of the centre of each gauge and the orientation of said gauge in the coordinate system associated with said structural element.
